# NEUE EUROPÄISCHE PATENTSCHRIFT

(11) **EP 1 170 198 B2**
(45) Veröffentlichungstag und Bekanntmachung des Hinweises auf die Entscheidung über den Einspruch: **11.03.2015**
(45) Hinweis auf die Patenterteilung: 03.05.2006
(21) Anmeldenummer: 01114941.6
(22) Anmeldetag: 20.06.2001
(51) Int. Cl.: B62D 25/20, B62D 21/10, B62D 27/04

(54) **Kraftfahrzeugkarosserie mit seitlichen Schwellern**
Motor car body with side sills
Carrosserie de véhicule avec longerons latéraux

(30) Priorität: 04.07.2000 DE 10032342
(43) Veröffentlichungstag der Anmeldung: 09.01.2002
(73) Patentinhaber: Bayerische Motoren Werke Aktiengesellschaft, 80809 München (DE)
(72) Erfinder: Rill, Roland, 80807 München (DE)

(56) Entgegenhaltungen:
- EP-A- 0 856 455
- EP-B1- 1 118 528
- DE-A1- 4 102 944
- DE-A1- 19 531 982
- DE-A1- 19 648 495
- DE-A1- 19 711 014
- DE-C- 763 051
- DE-U- 8 322 208
- US-A- 2 058 181
- US-A- 4 493 506
- US-A- 4 615 558
- US-A- 4 911 495
- US-A- 5 242 209

## Beschreibung

Die Erfindung bezieht sich auf eine Kraftfahrzeugkarosserie mit seitlichen Schwellern der im Oberbegriff des Patentanspruchs 1 genannten Art.

Aus der US 4,493,506 ist eine Kraftfahrzeugkarosserie mit seitlichen Schwellern bekannt, die jeweils aus einem Blechinnenteil und einem mit diesem verbundenen, nach außen abstehenden Blechaußenteil bestehen. Das Blechaußenteil weist einen zumindest angenähert lotrecht verlaufenden Wandungsabschnitt auf.

Ferner ist aus der EP 0 919 454 A2 (Figur 3) eine Kraftfahrzeugkarosserie mit seitlichen Schwellern bekannt, bei denen die Blechaußenteile eine nach außen ragende Ausbuchtung mit etwa U-förmigem Querschnitt haben. Falls zur Erhöhung der Beulsteifigkeit das an einem Schweller vorgesehene Blechaußenteile aus einem hochfesten Stahlblech gefertigt werden soll, so ist an einem derartigen Stahlblech eine große Ziehtiefe, welche zur Herstellung einer entsprechend großen Ausbuchtung erforderlich ist, fertigungstechnisch schwierig zu erzeugen.

Aufgabe der Erfindung ist es daher, das Blechaußenteil eines Schwellers der im Oberbegriff des Patentanspruchs 1 genannten Art derart auszubilden, dass es trotz einer vergleichsweise geringen Ziehtiefe eine hohe Beulsteifigkeit hat.

Zur Lösung der Aufgabe sind die im Patentanspruch 1 dargelegten Merkmale vorgesehen.

Durch das erfindungsgemäß an dem etwa lotrecht verlaufenden Wandungsabschnitt des Blechaußenteils befestigte Versteifungsteil kann vorteilhafterweise die Ziehtiefe der U-förmigen Ausbuchtung des Blechaußenteils auf beispielsweise 85 mm vermindert und dadurch hochfeste Stahlbleche verwendet werden, sodass das Blechaußenteil sowohl bei einem Frontalcrash als auch bei einem Seitencrash eine hohe Beulsteifigkeit aufweist. Dabei besteht das Versteifungsteil aus einem einfach und damit kostengünstig herstellbaren, U-förmigen Blechteil, das lediglich an seinen Längsrändern in Fahrzeuglängsrichtung am Blechaußenteil des Schwellers durch Punktschweißen befestigt wird. Gegenüber einem Schweller, dessen Blechaußenteil eine große Ausbuchtung hat, wird durch das räumlich gedrungene Versteifungsteil ferner auch eine Gewichtsverminderung erreicht. Dabei ist die jeweilige Materialgüte des Versteifungsteils frei wählbar, d. h. diese hängt nicht vom Material des Blechaußenteils ab.

Dabei hat das Versteifungsteil einen etwa U-förmigen Querschnitt, an dessen Schenkeln jeweils ein Befestigungsflansch ausgebildet ist. Über diese wird das Versteifungsteil jeweils im Bereich von im Hohlraum des Schwellers vorhandenen Schottblechen mit dem lotrechten Wandungsabschnitt des Blechaußenteils durch Punktschweißen verbunden, wodurch die Beulsteifigkeit des Schwellers im Bereich des Versteifungsteils noch erhöht wird. Dieses ist auch über die Befestigungsflansche in optimaler Weise mit dem Blechaußenteil zu verschweißen.

Schließlich kann am obenliegenden Rand des Versteifungsteils ein mit diesem verklipstes, zweckmäßigerweise aus Kunststoff bestehendes Schwellerverkleidungsteil aufliegen, das sich bis zum untenliegenden Rand des Blechinnenteils erstreckt und mit diesem durch eine Klemm- oder Schnappwirkung lösbar verbunden ist.

Zwar ist aus der DE 18 06 402 A1 (Figur 6) ein aus einem Blechinnenteil und ein mit diesem verbundenen Blechaußenteil mit U-förmiger Ausbuchtung bekannt, deren etwa lotrecht verlaufender Wandungsabschnitt von einem Formblechteil überdeckt ist. Dieses ist im Türausschnitt mit dem Blechinnenteil und dem Blechaußenteil verschweißt. Da somit das Formblechteil lediglich zur Überdeckung des Blechaußenteils dient, wird dessen Beulsteifigkeit nicht durch das Formblechteil erhöht.

Ein Ausführungsbeispiel der Erfindung ist in der Zeichnung dargestellt und wird im Folgenden erläutert. Es zeigt:
- Figur 1: einen Personenkraftwagen in einer Seitenansicht,
- Figur 2: einen Schnitt längs der Linie II-II in Figur 1 in größerer Darstellung.

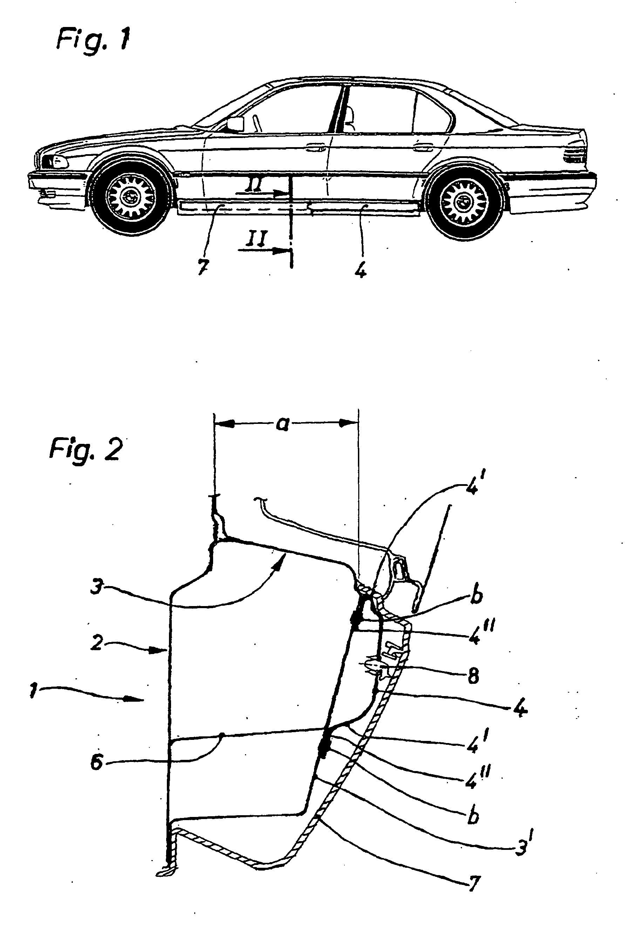

Die Karosserie des in Figur 1 dargestellten Personenkraftwagens hat zwei seitliche Schweller 1, die - wie Figur 2 zeigt - aus einem an der Kraftfahrzeugkarosserie liegenden Blechinnenteil 2 und einem mit diesem verbundenen sowie unter Bildung einer U-förmigen Ausbuchtung um ein Maß a nach außen abstehenden Blechaußenteil 3 besteht. Dieses hat einen etwa lotrecht verlaufenden Wandungsabschnitt 3', auf dessen Außenseite ein sich in Fahrzeuglängsrichtung erstreckendes Versteifungsteil 4 befestigt ist. Dieses weist einen etwa U-förmigen Querschnitt auf, wobei an den beiden Schenkeln 4' des U-förmigen Querschnitts jeweils ein zur Unterseite des Blechaußenteils 3 verlaufender Befestigungsflansch 4" ausgebildet ist. Über die beiden Befestigungsflansche 4" ist das Versteifungsteil 4 im Bereich von jeweils einem Schottblech 6 mit dem etwa lotrechten Wandungsabschnitt 3' des Blechaußenteils 3 durch eine Anzahl von Schweißpunkten b verbunden. Dabei sind in dem vom Blechaußenteil 3 umgebenen Hohlraum des Schwellers 1 mehrere, jeweils in einem Abstand voneinander angeordnete Schottbleche 6 vorgesehen.

Wie in Figur 2 ferner ersichtlich, liegt auf dem obenliegenden Rand des Versteifungsteils 4 ein aus Kunststoff bestehendes Schwellerverkleidungsteil 7 mit etwa U-förmigem Querschnittsprofil auf. Dabei erstreckt sich das Schwellerverkleidungsteil 7 bis zum untenliegenden Rand des Blechinnenteils 2 und ist dabei an diesem lösbar festgelegt. Ferner ist das Schwellerverkleidungsteil 7 über mehrere, im Abstand voneinander liegende Klipse 8 am Versteifungsteil 4 lösbar angebracht.

## Patentansprüche

1. Kraftfahrzeugkarosserie mit seitlichen Schwellern, jeweils im Wesentlichen bestehend aus einem Blechinnenteil (2) und einem mit diesem verbundenen, nach außen abstehenden Blechaußenteil (3), das einen zumindest angenähert lotrecht verlaufenden Wandungsabschnitt (3') aufweist, **dadurch gekennzeichnet, dass** an dem etwa lotrechten Wandungsabschnitt (3') des Blechaußenteils (3) ein sich in Fahrzeuglängsrichtung erstreckendes Versteifungsteil (4) befestigt ist, wobei das Versteifungsteil aus einem U-förmigen Blechteil besteht, das lediglich an seinen Längsrändern in Fahrzeuglängsrichtung am Blechaußenteil des Schwellers durch Punktschweißen, befestigt ist, wobei an den beiden Schenkeln (4') des Versteifungstells (4) mit dem etwa U-förmigen Querschnitt jeweils ein Befestigungsflansch (4") ausgebildet ist, über die das Versteifungsteil (4) jeweils im Bereich eines Schottblechs (6) - wobei im Hohlraum des Schwellers (1) mehrere Schottbleche im Abstand voneinander vorgesehen sind - mit dem etwa lotrechten Wandungsabschnitt (3') durch Punktschweißen (Schweißpunkte b) verbunden ist.

## Claims

1. A vehicle body with lateral sillboards, each substantially comprising an inner sheet-metal part (2) connected to an outwardly projecting outer sheet-metal part (3) which has an at least approximately vertical wall portion (3'), **characterised in that** a reinforcing part (4) extending in the longitudinal direction of the vehicle is fastened to the approximately vertical wall portion (3') of the outer sheet-metal part (3), wherein the reinforcing part is a U-shaped sheet-metal part connected only by its longitudinal edges in the longitudinal direction of the vehicle to the outer sheet-metal part of the sillboard by spot welding, wherein a fastening flange (4") is formed on both limbs (4') of the reinforcing part (4) having the approximately U-shaped cross-section, via which the reinforcing part (4), in each case near a metal partition plate (6), wherein a number of spaced-apart metal partition plates are provided in the cavity in the sillboard (1), is connected to the approximately vertical wall portion (3') by spot welding (welds b).

## Revendications

1. Carrosserie de véhicule comportant des longerons latéraux, essentiellement constitués, chacun d'une pièce de tôle intérieure (2) et d'une pièce de tôle extérieure (3) reliée à celle-ci, écartée vers l'extérieur et qui comporte au moins un segment de paroi (3') s'étendant au moins approximativement à la verticale,
**caractérisée en ce que**
sur ce segment de paroi (3') s'étendant essentiellement à la verticale de la pièce de tôle extérieure (3) est fixée une pièce de renforcement (4) s'étendant dans la direction longitudinale du véhicule, cette pièce de renforcement étant constituée d'une pièce de tôle en forme de U qui est fixée uniquement par ses bords longitudinaux dans la direction longitudinale du véhicule sur la pièce de tôle extérieure du longeron par des soudures ponctuelles, sur les deux branches (4') de la pièce de renforcement (4) ayant une section essentiellement en forme de U étant respectivement réalisée une bride de fixation (4") par l'intermédiaire de laquelle la pièce de renforcement (4) est respectivement reliée, par des soudures par point (points de soudure b), dans la zone d'une tôle de cloison étanche avec le segment de paroi (3') essentiellement vertical, plusieurs tôles de cloison étanche situées à distance les unes des autres étant prévues dans le volume creux du longeron (1).
